# EUROPEAN PATENT SPECIFICATION

(11) **EP 2 293 630 B1**
(45) Date of publication and mention of the grant of the patent: **16.08.2017**
(21) Application number: 08874765.4
(22) Date of filing: 17.12.2008
(51) Int. Cl.: H04W 60/04

(54) **METHOD FOR DETACHING NETWORK, METHOD FOR DEACTIVATING ISR AND INDICATION DEVICE THEREOF**
VERFAHREN ZUR NETZWERK-ABLÖSUNG, VERFAHREN ZUR ISR-DEAKTIVIERUNG UND ANZEIGEEINRICHTUNG DAFÜR
PROCÉDÉ POUR DÉTACHER UN RÉSEAU, PROCÉDÉ POUR DÉSACTIVER L'ISR ET DISPOSITIF D'INDICATION ASSOCIÉ

(30) Priority: 27.06.2008 CN 200810127564
(43) Date of publication of application: 09.03.2011
(73) Proprietor: ZTE Corporation, Shenzhen, Guangdong 518057 (CN)
(72) Inventor: LIANG, Shuang, Guangdong 518057 (CN); WANG, Jing, Guangdong 518057 (CN); ZHU, Jinguo, Guangdong 518057 (CN); LU, Fei, Guangdong 518057 (CN)
(74) Representative: Rapisardi, Mariacristina
(86) International application number: PCT/CN2008/073541
(87) International publication number: WO 2009/155766

(56) References cited:
- EP-A1- 2 081 396
- US-A1- 2005 144 494
- US-A1- 2008 026 698
- "Clarification of detech procedures", 3GPP TSG-SA2 MEETING #66 MONTREAL, CANADA, 23 ? 27 JUNE 2008, XX, XX , no. S2-084713 23 June 2008 (2008-06-23), pages 1-7, XP008146062, Retrieved from the Internet: URL:http://www.3gpp.org/ftp/tsg_sa/WG2_Arc h/TSGS2_66_Montreal/Docs/
- ZTE: "Discussion on Detach procedure", 3GPP DRAFT; S2-084712_DISCUSSION ON DETACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Montreal; 20080618, 18 June 2008 (2008-06-18), XP050266815, [retrieved on 2008-06-18]
- ZTE: "Detach procedure with ISR activated", 3GPP DRAFT; S2-083424_DETACH WITH ISR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080501, 1 May 2008 (2008-05-01), XP050265640, [retrieved on 2008-05-01]
- HUAWEI: "Procedure of ISR Deactivation", 3GPP DRAFT; S2-075016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Ljubljana; 20071102, 2 November 2007 (2007-11-02), XP050261747, [retrieved on 2007-11-02]
- '3GPP TSG SA WG2 Meeting #66, TD S2-084713', 18 June 2008, MONTREAL. CANADA article ZTE ET AL.: 'Discussion on Detach procedure', XP008146062
- '3GPP TSG SA WG2 Meeting #66, TD S2-084712', 18 June 2008, MONTREAL.CANADA article ZTE ET AL.: 'Discussion on Detach procedure', XP050266815

## Description

### Technical Field

The present invention relates to communication field, and more particularly to a method for detaching network, a method for deactivating idle mode signaling reduction (ISR) and an indicating device for deactivating ISR, a mobility management entity and a serving general packet radio service (GPRS) support node.

### Background of the Invention

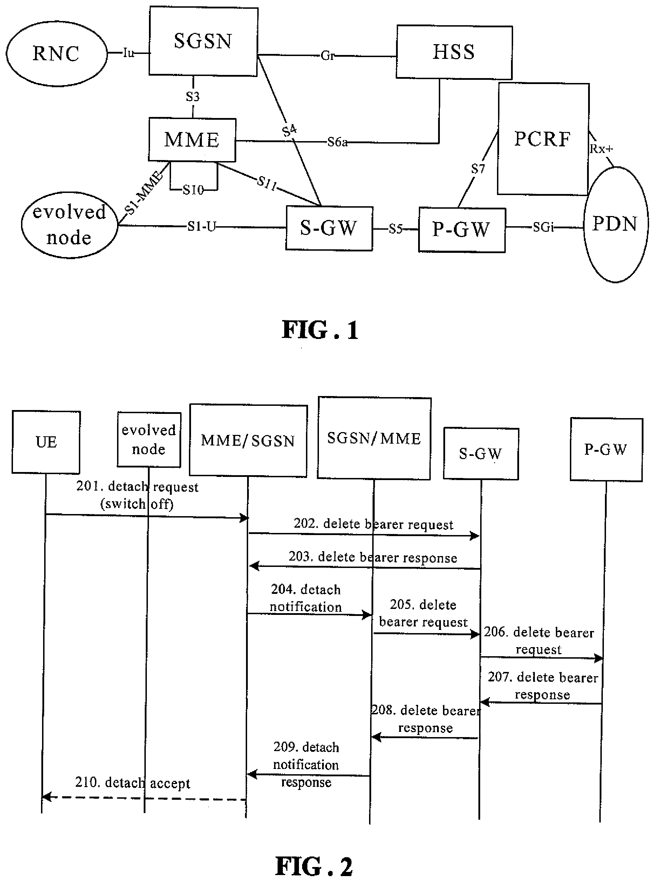

In order to keep the competence of the third generation mobile communication system in the communication field, the 3rd generation partnership project (3GPP) standard working group is working at the study of evolved packet system (EPS). Fig.1 is a schematic diagram illustrating the system structure of the EPS. As shown in Fig.1, the EPS mainly includes two parts: an evolved universal terrestrial radio access network (E-UTRAN) and an evolved packet core (EPC). The EPC of the EPS system is able to support a user to access from a GSM EDGE radio access network (GERAN) and from a universal terrestrial radio access network (UTRAN).

An EPC packet core network mainly includes a home subscriber server (HSS), a mobility management entity (MME), a serving gateway (S-GW), a PDN gateway (P-GW) and a serving GPRS support node (SGSN), wherein:
the HSS is a permanent storage place of user subscription data, and is located in the home network subscribed by the user; the MME is a storage place of the user subscription data in the current network, and implements the signaling management between terminals and the non-access stratum (NAS) of the network, the tracking and paging management function under user idle mode and bearer management; the S-GW is a gateway from the core network to the radio system, and implements the user plane bearer(s) from terminals to the core network, the data buffer under terminal idle mode, the function of the network side to initiate a service request, legal monitoring and packet data routing and forwarding function; the P-GW is a gateway between the EPS and the network outside the system, and implements the IP address allocation of a terminal, charging function, packet filtering, strategy application and etc.; the SGSN is a service supporting point for a GERAN and UTRAN user to access the EPC network, the function of which is similar to the MME, implements the functions such as the location update of a user, paging management and bearer management.

When the coverage area in which a user equipment (UE) resides is changed, for example, moving from a radio access technology (RAT) coverage area to another RAT coverage area, the UE finds it enters an unregistered area by monitoring a broadcast channel. it is necessary to register in the new RAT coverage area to guarantee the service continuity between the UE and the core network; therefore, the UE will initiate an inter RAT tracking area update (TAU) or routing area update (RAU) procedure.

For a dual-mode UE located in the overlapping area or neighboring area between the UTRAN/GERAN coverage area and the E-UTRAN coverage area, it may frequently initiate a TAU or RAU procedure in the two registered areas because of the frequent movement between the two coverage areas or the signal strength within the overlapping area, which causes a heavy burden for air interface. Therefore, in an EPS system, an ISR function is introduced to reduce the air interface signaling between the UE and the core network. After the ISR function is activated, a UE having the function of accessing both the UTRAN/GERAN and the E-UTRAN may register to the MME and the SGSN at the same time; the respective registrations of the UE in the MME and in the SGSN through two access networks are mutually independent. Thus, in the above case, a UE with activated ISR does not frequently initiate the TAU or RAU procedure any more on moving in the overlap area or neighbor area covered by two RATs, so as to reduce unnecessary air interface signaling and save the air interface resource.

A UE with activated ISR can stay in the connection state only in one access mode at one time; therefore, a request may be initiated via only one kind of access network when a UE is explicitly separated from the network because it is switched off; after receiving the detach request, the MME or the SGSN notifies another SGSN or MME that the UE has been detached.

Taking the network detach caused by that a UE with activated ISR is switched off in the case of EUTRAN access as an example, Fig. 2 is a flowchart illustrating the detach procedure caused by that the UE with activated ISR is switched off; as shown in Fig. 2, the detach procedure includes the following steps (Steps 201-210):
Step 201, a UE initiates a detach request carrying GUTI and a switch off indication; the indication is used for indicating the network the reason for detach;
Step 202, the MME sends to the S-GW a Delete Session Request message carrying a TEID;
Step 203, the S-GW deletes the bearer context established between the S-GW and the MME, and replies a Delete Session Response message to the MME;
Step 204, the MME sends a detach notification message to the SGSN according to the address of the SGSN with activated ISR in the UE related information originally stored;
Step 205, after receiving the detach notification message of Step 204, the SGSN sends to the S-GW a delete bearer request carrying the TEID;
Step 206, the S-GW sends a Delete Session Request message to the P-GW;
Step 207, the P-GW returns a Delete Session Response message to the S-GW;
Step 208, the SGSN returns a detach notification response to the MME;
Step 209, the S-GW deletes the bearer context established between the S-GW and the SGSN, and replies a delete bearer response to the SGSN;
Step 210, the MME releases the S1-MME signaling connection through sending an S1 releasing indication to the eNB; if the radio connection between the eNB and the UE has been released, the UE may be unable to obtain the message, which does not affect the eNB to delete the UE context after the eNB sends the message.

Besides the detach caused by the switch off of the UE, there are other types of detach such as the detach initiated by the MME to the EPS network or the detach initiated by the SGSN to the GPRS network caused by the access limit to the EPS or the GPRS network due to the HSS subscription; the detach initiated by the MME or the SGSN to the EPS network or the GPRS network since the UE does not contacts with the network side by performing the TAU or RAU for a long time.

For the above cases, there is no solution at present. On the one hand, since the UE activates the ISR, certain related relations are respectively established between the MME and the SGSN, the MME, the SGSN and the S-GW of two networks; when detach happens at one of the above networks, the ISR should be deactivated, and the related relations should also be canceled. On the other hand, since the registration processes for the UE with activated ISR to access the MME and the SGSN through two access networks should be mutually independent, in the above cases, the detach in one network should not cause the detach in another network.

To sum up, to use the same mode as the detach caused by the switch off of the UE in the detach of the above cases is not applicable, and is not able to guarantee the correct execution of ISR deactivation procedure. Discussion on Detach procedure, 3GPP DRAFT; S2-084712, 2008-6-18 provides a related technical solution. However, the above mentioned technical problem still remains unsolved.

### < Summary of the Invention

Considering the problems existing in the related art that in the case that the ISR is activated, the current detach procedure is unable to be widely applicable to other detach cases apart from the detach caused by the switch off of a UE and there is no method applicable to other detach cases apart from the detach caused by the switch off of the UE, the present invention is provided. Therefore, the present invention intends to provide an improved ISR deactivating scheme to solve at least one of the above problems.

According to an aspect of the present invention, a method for deactivating ISR is provided.

The method for deactivating ISR according to the present invention comprises: when a registration state of a user equipment of a current core network node in a pair of core network nodes with ISR activated is changed, sending an ISR deactivating message or a detach notification message to an associated core network node and indicating the associated core network node to perform related operation; wherein the related operation indicated by the ISR deactivating message comprises one of the following: ISR deactivation, ISR deactivation and bearer deletion; wherein the related operation indicated by the detach notification message comprises one of the following: detach only in the current network locally, detach in both the current network and the associated network completely; characterized in that in the case that the detach is not caused by the switch off of the user equipment, the related operation is the ISR deactivation; in the case that an ISR deactivation is caused by the detach which is caused by the switch off of the user equipment or by a change of one of the pair of core network nodes with ISR activated, the related operation is the ISR deactivation and the bearer deletion; wherein in the case that the detach is not caused by the switch off of the user equipment, the related operation is detach only in the current network locally; in the case that the detach is caused by the switch off of the user equipment, the related operation is detach in both the current network and the associated network completely.

In addition, before sending the ISR deactivating message to the associated core network node, the method further comprises: the current core network node initiating a procedure for detaching the user equipment; the current core network node performing a delete bearer procedure between the current core network node and a serving gateway.

In addition, before sending the ISR deactivating message to the associated core network node, the method further comprises: a home subscriber server sending a cancel location request to the current core network node; the current core network node initiating a procedure for detaching the user equipment; the current core network node performing a delete bearer procedure between the current core network node and a serving gateway.

In addition, before sending the ISR deactivating message to the associated core network node, the method further comprises: the current core network node performing a delete bearer procedure between the current core network node and a serving gateway when an implicit detach timer set by the current core network node expires.

Preferably, the ISR deactivating message carries operation indicating information; performing the ISR deactivation or performing the ISR deactivation and bearer deletion is represented through setting different values for the operation indicating information.

Wherein, the core network node comprises: a mobility management entity and a serving GPRS support node; and the bearer(s) deleted in the delete bearer procedure comprises: the bearer(s) between a serving gateway and the serving GPRS support node; and the bearer(s) between the serving gateway and a packet data network gateway.

In addition, before sending the detach notification message to the associated core network node, the method further comprises: the current core network node performing a delete bearer procedure between the current core network node and a serving gateway when an implicit detach timer set by the current core network node expires.

In addition, before sending the detach notification message to the associated core network node, the method further comprises: a home subscriber server canceling an access authority of the current network; the current core network node initiating a procedure for detaching the user equipment; the current core network node performing a delete bearer procedure between the current core network node and a serving gateway.

In addition, the detach notification message carries operation information; performing detach in the current network locally or performing detach in both the current network completely and the associated network is represented through setting different values for the operation information.

According to yet another aspect of the present invention, an indicating device for deactivating ISR is provided and is located in a core network node with activated ISR function.

The indicating device for deactivating ISR according to the present invention comprises the indicating device for deactivating ISR is configured, when a registration state of a user equipment of the core network node is changed, to send an ISR deactivating message or a detach notification message to an associated core network node of the core network node, and to instruct the associated core network node to perform related operation; wherein the related operation indicated by the ISR deactivating message comprises one of the following: ISR deactivation, ISR deactivation and bearer deletion; wherein the related operation indicated by the detach notification message comprises one of the following: detach only in the current network locally, detach in both the current network and the associated network completely; characterized in that in the case that the detach is not caused by the switch off of the user equipment, the related operation is the ISR deactivation; in the case that an ISR deactivation is caused by the detach which is caused by the switch off of the user equipment or by a change of one of the pair of core network nodes with ISR activated, the related operation is the ISR deactivation and the bearer deletion; wherein in the case that the detach is not caused by the switch off of the user equipment, the related operation is detach only in the current network locally; in the case that the detach is caused by the switch off of the user equipment, the related operation is detach in both the current network and the associated network completely.

In addition, the instructing device for deactivating ISR is located in a mobility management entity and/or a serving GPRS support node.

According to yet another aspect of the present invention, a mobility management entity is provided; and the mobility management entity according to an embodiment of the present invention comprises the above indicating device for deactivating ISR. According to yet another aspect of the present invention, a serving GPRS support node is provided; and the serving GPRS support node according to the present invention comprises the above indicating device for deactivating ISR.

By at least one of the above technical solutions of the present invention, with the present invention, for the UE activating the ISR, when the MME/SGSN and HSS initiate the detach for one of the networks, the UE sends an ISR deactivating message to the CN node of the associated, and instructs the CN node of the associated to perform the related operation. Compared with the prior art, it is possible for the present invention to avoid the procedure error caused by the asynchronization of ISR state.

Other features and advantages of the present invention will be described in the following description and partly become obvious from the description, or be understood by implementing the present invention. The objects and other advantages of the present invention can be realized and obtained through the structures indicated particularly by the description, claims and drawings. >

### Brief Description of the Drawings

The accompanying drawings are used for further illustrating the present invention and constitute a part of the specification. The accompanying drawings are used to explain the present invention together with the embodiments of the present invention and are not used for limiting the present invention, wherein:
Fig. 1 is a schematic diagram illustrating the system structure of the EPS network according to related art;
Fig. 2 is a flowchart illustrating the detach procedure caused by that the UE with activated ISR is switched off according to related art;
Fig. 3 is a flowchart illustrating the method for deactivating ISR according to method embodiment 1 of the present invention;
Fig. 4 is a flowchart illustrating the method for deactivating ISR according to method embodiment 2 of the present invention;
Fig. 5 is a flowchart illustrating the method for deactivating ISR according to method embodiment 3 of the present invention;
Fig. 6 is a flowchart illustrating the method for deactivating ISR according to method embodiment 4 of the present invention.

### Detailed Description of Embodiments

### General description of functions

As stated above, in the case of that an ISR function is activated, the detach procedure caused by the switch off of a UE can not be effectively applicable to other scenes; therefore, in the technical solution provided by an embodiment of the present invention, for the UE activating the ISR, when the MME/SGSN and HSS initiate the detach for one of the networks, the UE sends an ISR deactivating message to the CN node of the associated, and instructs the CN node of the associated to perform the related operation, wherein the related operation comprises one of the following: ISR deactivation, and ISR deactivation and bearer deletion. Compared with the prior art, the technical solution provided by an embodiment of the present invention enables the MME/SGSN to adopt an effective mode to deactivate the ISR and the related relation between them.

A detailed description is given to the preferred embodiments of the invention with reference to the accompanying drawings. The preferred embodiment of the present invention described herein is for the purpose of illustrating and describing the present invention, not for limiting the present invention. The embodiments of the present invention and the features of the embodiments can be combined with each other if there is no conflict.

A method for deactivating ISR is first provided according to an embodiment of the present invention. In the method, when a registration state of a UE of a current CN node in a pair of CN nodes with activated ISR function is changed, it sends an ISR deactivating message to an associated CN node and indicating the associated CN node to perform related operation, wherein the related operation comprises (but is not limited to) one of the following: ISR deactivation, and ISR deactivation and bearer deletion. The CN node mentioned herein may be a MME or a SGSN.

Preferably, in a detailed implementing process, an implicit detach timer may be set in the current CN node, wherein when the implicit detach timer expires, the current CN node performs a delete bearer procedure between the current CN node and the serving gateway; and afterwards, the current CN sends an ISR deactivating message to the associated CN node.

Wherein in the case that the detach is not caused by the switch off of the UE, the related operation is the ISR deactivation; and in the case that the ISR deactivation is caused by the detach which is caused by the switch off of the UE or by the change of one of MME/SGSN, the related operation is the ISR deactivation and the bearer deletion.

Wherein the particular operation performed by the associated CN node may be implemented by the following two manners.
Manner 1: indicating information is carried in the ISR deactivating message; the indicating information adopts the manner of reason value, for example, reason value 1 representing that the current detach does not affect the registration information of the UE with activated ISR in another network, but is only used for deactivating the ISR; reason value 2 representing that the current detach will cause the detach of the UE with activated ISR in another network and it is necessary to perform ISR deactivation and bearer deletion (UE detach);
Manner 2: the indicating information is carried in the ISR deactivating message; the indicating information adopts the manner of default value, for example, if no indication is carried, it represents that the current detach does not affect the registration information of the UE with activated ISR in another network, but is only used for deactivating the ISR; otherwise, carrying an indication represents that the current detach will cause the detach of the UE with activated ISR in another network, and it is necessary to perform ISR deactivation and bearer deletion (UE detach); vice versa.

### Method embodiment 1

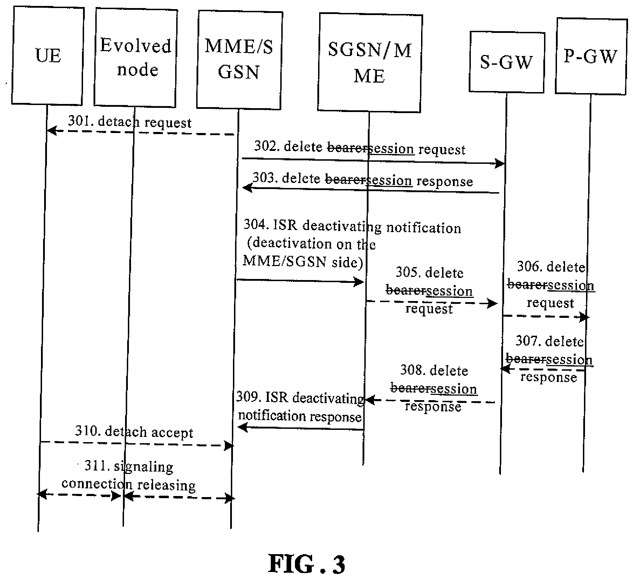

In the embodiment, the UE with activated ISR does not contact the network side by performing the TAU or RAU for a long time, and the MME or SGSN initiates to detach the UE. The description is hereinafter given by taking that the MME initiates to detach the UE as an example. The detach procedure initiated by the SGSN is similar with this procedure, thus no more description will be given. Fig. 3 is a flowchart illustrating the method for deactivating ISR according to method embodiment 1 of the present invention. As shown in Fig. 3, it includes the following steps (Steps 301-311).
Step 301, the MME initiates a procedure for detaching the UE, wherein if the detach is caused by that the implicit detach timer expires because it has not had communication with UE for a long period of time, the MME does not send a detach request message to the UE; and if the MME notifies the UE to perform detach because of other reasons, the MME will send the detach message, and the message carries the detach type which is used to notify the UE of the subsequent operations.
Step 302, the MME sends to the S-GW a Delete Session Request message carrying a TEID.
Step 303, the S-GW deletes the bearer context established between the S-GW and the MME, and replies a Delete Session Response message to the MME.
Step 304, If ISR is activated, the MME sends an ISR deactivating notification to the associated SGSN with activated ISR whose address stored in the UE context; wherein the ISR deactivating notification carries a cause value representing that the UE is detached in the current network and it does not affect the registration of another network, i.e., indicating the SGSN only to deactivate ISR.
Step 305, after receiving the ISR deactivating notification message, the SGSN deactivates ISR, i.e. removes the flag of ISR activation in the UE context, and deletes the associated MME information.
   The SGSN determines whether to delete the bearer between the SGSN and the S-GW according to the state of the UE in the current access network which the SGSN belongs to. For example, the implicit detach timer of the SGSN also expires because it has not had communication with UE for a long period of time under the UTRAN/GERAN access, wherein if the SGSN determines to detach the UE as well, it sends to the S-GW a Delete Session Request message carrying the TEID, and goes to Step 306; otherwise, skips Steps 306∼308.
Step 306, the S-GW sends a Delete Session Request message to the P-GW.
Step 307, the P-GW returns a Delete Session Response message to the S-GW.
Step 308, the S-GW deletes the bearer context established between the S-GW and the SGSN, and replies a Delete Session Response message to the SGSN.
Step 309, the SGSN returns a response for the ISR deactivating notification to the MME.
Step 310, if the UE receives the detach request in Step 301, it returns a detach accept message to the MME. It should be noted that the message may be sent at any proper time after the receiving in Step 301, which has no reference to the processing of Steps 302∼309.
Step 311, if the detach type carried in the detach request sent by the MME in Step 301 does not indicate that the UE should attach again in this MME, the MME sends a S1 releasing indication to the eNB to release the S1-MME signaling connection; and if the radio connection between the eNB and the UE still exists, the radio connection will also be released.

### Method embodiment 2

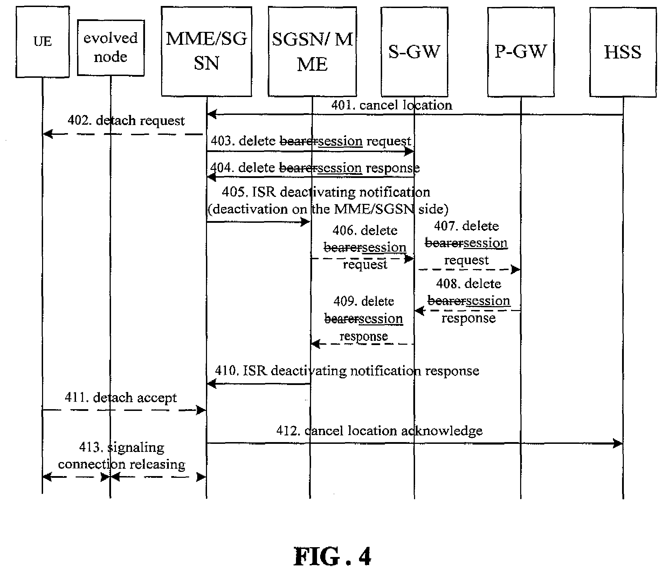

In the embodiment, the access limit to the EPS or the GPRS network subscribed in the HSS causes that the MME initiates the detach for the EPS network or the SGSN initiates the detach for the GPRS network. In this scene, the UE has activated the ISR. Fig. 4 is a flowchart illustrating the method for deactivating ISR according to method embodiment 2 of the present invention. As shown in Fig. 4, the procedure includes the following steps (Steps 401∼412):
Step 401, if the subscribing data of the HSS is changed and it is desired to prohibit the UE from using the EPS network, the HSS sends to the MME a cancel location request; wherein the cause carried by the cancel location request is a subscription prohibition.
Step 402, if the cause is the subscription prohibition, the MME will send a detach request to the UE.
Step 403, the MME sends to the S-GW a Delete Session Request message carrying a TEID.
Step 404, the S-GW deletes the bearer context established between the S-GW and the MME, and replies a Delete Session Response message to the MME.
Step 405, If ISR is activated, the MME sends an ISR deactivating notification to the SGSN with activated ISR whose address stored in the UE context; wherein the ISR deactivating notification carries a cause value representing that the UE is detached in the current network which the MME belongs to, and it does not affect the registration of another network, i.e. indicating the SGSN only to deactivate ISR.
Step 406, after receiving the ISR deactivating notification message, the SGSN deactivates ISR i.e. removes the flag of ISR activation in the UE context, and deletes the associated MME information.
   The SGSN determines whether to delete the bearer(s) between the SGSN and the S-GW according to the state of the UE in the current access network which the SGSN belongs to. For example, the timer of the SGSN also expires because it has not had communication with UE for a long period of time under the UTRAN/GERAN access, wherein if the SGSN determines to detach the UE as well, it sends to the S-GW a Delete Session Request message carrying the TEID; otherwise, skips the steps 407∼409.
Step 407, the S-GW sends a Delete Session Request message to the P-GW.
Step 408, the P-GW returns a Delete Session Response message to the S-GW.
Step 409, the S-GW deletes the bearer context established between the S-GW and the SGSN, and replies a Delete Session Response message to the SGSN.
Step 410, the SGSN returns a response for the ISR deactivating notification to the MME.
Step 411, if the UE receives the detach request in Step 402, it returns a detach accept message to the MME. The detach accept message may be sent at any proper time after the receiving of Step 402, which has no reference to the processing of Steps 402∼410.
Step 412, if the detach type carried in the detach request sent by the MME in Step 402 does not indicate that the UE should attach again in the MME, the MME sends a S1 releasing indication to the eNB to release the S1-MME signaling connection; and if the radio connection between the eNB and the UE still exists, the radio connection will also be released.

### Method embodiment 3

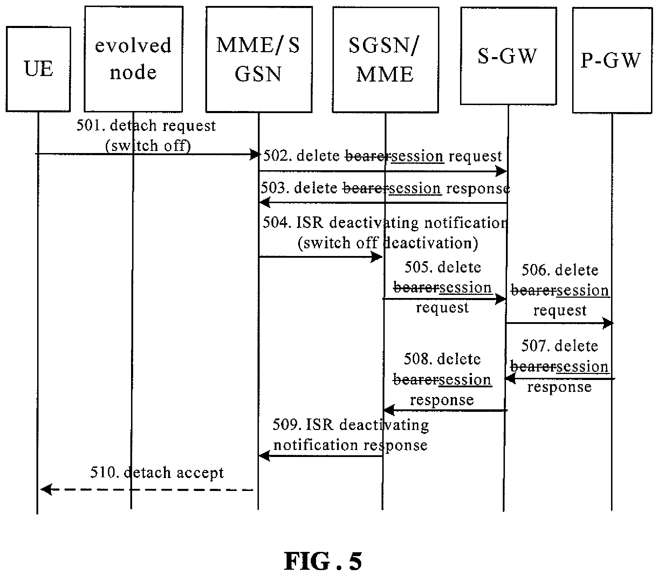

The method for deactivating ISR provided by the embodiment of the present invention is also applicable to the current detach procedure caused by the switch off of the UE. Fig. 5 is a flowchart illustrating the method for deactivating ISR according to method embodiment 3 of the present invention. As shown in Fig. 5, the detach procedure caused by the switch off of the UE with activated ISR by use of the deactivating method of the present invention includes the following steps (Steps 501∼510).
Step 501, a UE initiates a detach request carrying a GUTI and a switch off indication (switch off) and the switch off indication (switch off) is used for presenting the reason of detach from the network.
Step 502, the MME sends to the S-GW a Delete Session Request message carrying a TEID.
Step 503, the S-GW deletes the bearer context established between the S-GW and the MME, and replies a Delete Session Response message to the MME.
Step 504, the MME sends an ISR deactivating notification to the SGSN with ISR activated whose address stored in the UE context; wherein the ISR deactivating notification carries a cause value indicating that the detach of the UE in the current network will cause the detach in another network, i.e. indicating that the SGSN needs to perform the ISR deactivation and UE detach (bearer deletion).
Step 505, after receiving the ISR deactivating notification message, the SGSN deactivates ISR and sends to the S-GW a Delete Session Request message carrying the TEID.
Step 506, the S-GW sends a Delete Session Request message to the P-GW.
Step 507, the P-GW returns a Delete Session Response message to the S-GW.
Step 508, the S-GW deletes the bearer context established between the S-GW and the SGSN, and replies a Delete Session Response message to the SGSN.
Step 509, the SGSN returns an ISR deactivating response to the MME.
Step 510, the MME releases the S1-MME signaling connection by sending a S1 releasing indication to the eNB wherein if the radio connection between the eNB and the UE has been released, the UE may be unable to acquire the message, which however does not affect that the eNB deletes the UE context after sending the message.

The foregoing is described by taking the detach of the MME side as an example, but the embodiment of the present invention is also applicable to the case that the detach is performed at the SGSN side, which will not be described here any more. In addition, the present invention may also be applicable to the ISR deactivating procedure caused by other reasons, for example, in the TAU/RAU procedure or HO procedure with the MME/SGSN changed, the procedure error caused by the ISR state asynchronization and the resource waste caused by the invalid information may all be avoided.

### Method embodiment 4

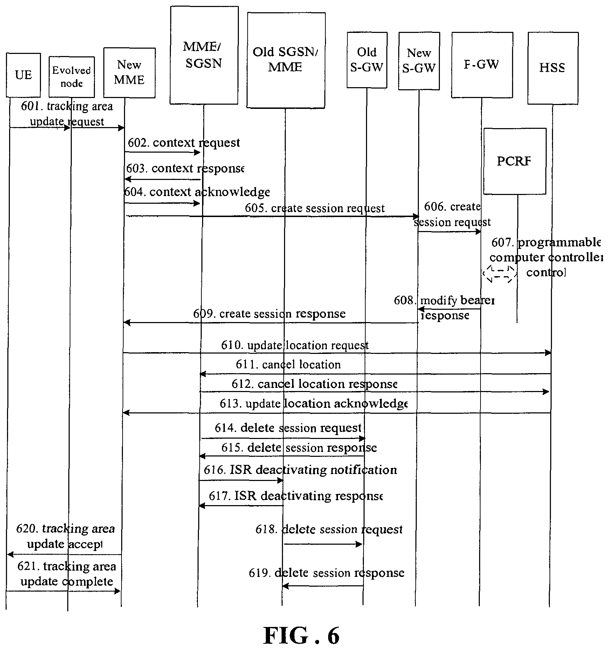

The embodiment describes the implementing process of the TAU procedure initiated by a UE with activated ISR moving to a new MME. In this process, the UE has activated the ISR between the original MME and the SGSN, the UE enters an unregistered TA due to the change of the location of the UE, initiates a TAU to attach to a new MME wherein the S-GW is changed. Fig. 6 is a flowchart illustrating the method for deactivating ISR according to method embodiment 4 of the present invention. As shown in Fig. 6, the procedure includes the following steps (Steps 601∼621).
Step 601, the UE initiates a tracking area update request, and sends it to a new MME via the eNB; and the request message carries a valid temporary user identity and the capability of the UE for supporting the ISR.
   Since the UE has activated the ISR, the UE has two valid temporary user identities including GUTI allocated by the old MME and P-TMSI allocated by the old SGSN. It is easy for those skilled in the art to select which temporary user identity is carried in the TAU according to the implementation requirement and implement it, which is not described here again.
Step 602, the new MME determines to acquire the context from the old MME or the old SGSN according to the GUTI or P-TMSI from the UE. The new MME sends a context request message to the old MME/SGSN.
Step 603, the old MME/SGSN returns the context information of the UE to the new MME via context response message.
Step 604, the new MME determines whether to activate the ISR according to the context information received from the old MME/SGSN. Herein, since the MME determines that the ISR will not be activated, the context acknowledge message returned by the new MME does not carry an ISR identity, which represents the ISR is deactivated.
Step 605, the new MME judges that the old S-GW can not serve the UE according to the selecting rule of the S-GW, the new MME reselects a new S-GW for the UE. The new MME initiates to the new S-GW a create session request message which carries the TEID, the IP address and the bearer context information of itself, to request reestablishing bearer information for the UE in the new S-GW.
Step 606, the new S-GW sends to a P-GW a modify bearer request message, to send the parameters such as the address information, the tunnel identity information and the access technology type of the S-GW to the P-GW.
Step 607, if the dynamic PCC is supported, the P-GW further needs to perform the interaction with the PCRF.
Step 608, the P-GW updates its context and returns to the S-GW a modify bearer response message information whose content including the address and the tunnel identity of the P-GW and etc.;
Step 609, the new S-GW returns to the new MME a create session response message to bring to the MME the destination GTP-C tunnel identity newly designated by the S-GW, the address of the new S-GW, the address and the tunnel information of the P-GW, and so on;
Step 610, the new MME notifies the HSS of the change of the location via an update location request message;
Step 611, the HSS only maintains one valid location information for each access network; therefore, the HSS sends a cancel location request to the old MME. Herein, the HSS does not send a cancel location request to the old SGSN.
Step 612, the old MME returns a cancel location response message to the HSS;
Step 613, the HSS returns an update location response to the new MME;
Step 614, after receiving the cancel location request sent by the HSS, the old MME sends to the old S-GW a delete session request carrying the TEID;
Step 615, the old S-GW deletes the EPS bearer(s) established between the old S-GW and the MME, and replies a delete session response to the old MME;
Step 616, the old MME sends an ISR deactivating notification message to the old SGSN with activated ISR whose address stored in the UE context; wherein the ISR deactivating notification message indicates that the detach of the UE in the current network may cause the detach in another network, i.e. indicating that the old SGSN needs to perform the ISR deactivating and UE detach (bearer deletion).
Step 617, after receiving the ISR deactivating notification, the old SGSN deactivates ISR and sends to the old S-GW a Delete Session Request message carrying the TEID;
Step 618, the old S-GW deletes the bearer context established between the old S-GW and the old SGSN, and replies a Delete Session Response message to the old SGSN.
Step 619, the old SGSN returns an ISR deactivating response to the old MME.
Step 620, if judging that the UE is valid within the current tracking area, the new MME sends a tracking area update accept message to the UE;
Step 621, if the new MME allocates a new GUTI identity for the UE via a TAU procedure, the UE returns a tracking area update complete message to the MME for acknowledgement.

In the above embodiments, whether the S-GW is changed does not affect the essence of the present invention. Even though the S-GW is not changed, the old MME will also adopt the same manner to notify the old SGSN of deactivating the ISR, and the old SGSN will also delete the bearer information established between the old SGSN and the S-GW according to the same indication.

In addition, in the process of the UE entering into an unregistered RA because of the change of location and initiating an RAU to complete the registration to a new SGSN, the ISR processing manner is similar to the embodiment, thus will not be described any more.

The ISR deactivating notification message in the embodiment of the present invention may be a new message, or may be realized by extending the existed detach notification message between the MME and the SGSN. If the manner of extending the detach notification message is adopted, it is further necessary to modify the triggers of sending this message in the MME or the SGSN, and the behavior upon reception of this message according to the manner described in the above embodiments.

According to an embodiment of the present invention, a method for a user equipment to detach from the network is provided.

The method for a user equipment to detach from the network comprises: when a registration state of a user equipment of a current core network node in a pair of core network nodes with ISR activated is changed, sending a detach notification message to an associated core network node and indicating the associated core network node to perform related operation, wherein the related operation illustrated here includes one of the following: detach only in the current network locally, and detach in both the current network and the associated network completely. The detach only in the current network locally may be understood as the above ISR deactivation only, and the detach in both the current network completely and the associated network may be understood as ISR deactivation and bearer deletion. The method for the user equipment to detach from the network is hereinafter described in detail with reference to embodiments 5-7.

### Method embodiment 5

The embodiment 5 is similar to the above method embodiment 1. Referring to Fig. 3, the method for the user equipment to detach from the network is similar to the method embodiment 1 (i.e. Steps 301-303 and Steps 305-311) except for Step 304. The embodiment 5 may be described referring to the description of the above method embodiment 1, which is not described here anymore.

In Step 304 of the present embodiment, the MME sends a detach notification message to the SGSN with ISR activated whose address stored in the UE context; wherein the detach notification message carries a cause value that the UE is detached in the current network which the MME belongs to and it does not affect the registration in another network, i.e. indicating the SGSN only to perform the ISR deactivating operation.

### Method embodiment 6

The embodiment 6 is similar to the above method embodiment 2. Referring to Fig. 4, the method for the user equipment to detach from the network is similar to the method embodiment 2 (i.e. Steps 401-404 and Steps 406-412), except for Step 405. The embodiment 6 may be described referring to the description of the above method embodiment 1, which is not described here anymore.

In Step 405 of the present embodiment, the MME sends a detach notification message to the SGSN with ISR activated whose address stored in the UE context; wherein the detach notification message carries a cause value representing that the UE is detached in the current network which the MME belongs to, and it does not affect the registration in another network, i.e. indicating the SGSN only to perform the ISR deactivating operation.

### Method embodiment 7

The embodiment 7 is similar to the above method embodiment 3. Referring to Fig. 5, the method for the user equipment to detach from the network is similar to method embodiment 3 (i.e. Steps 501-503 and Steps 504-510), except for Step 504, which is not described here anymore.

In the Step 504 in the embodiment, the MME sends a detach notification message to the SGSN a ISR activated whose address stored in the UE context; wherein the detach notification message carries a cause value indicating that the detach of UE in the current network may cause the detach in another network, i.e. indicating the SGSN to detach the UE in this network as well, which means the ISR deactivation and the bearer deletion.

Similarly, the foregoing is described by taking the detach of the MME side as an example, and however the embodiment of the present invention is also applicable to the case that the detach is performed at the SGSN side, which is not described here anymore.

An indicating device for deactivating ISR is also provided according to an embodiment of the present invention. The device is preferably used for implementing the above method for deactivating ISR. The device may reside in the CN node (for example MME or SGSN) with ISR activated, and is configured, when a registration state of a UE of the CN node is changed, to send an ISR deactivating message to an associated core network node of the CN node, and to indicate the associated core network node to perform related operation, wherein the related operation comprises one of the following: ISR deactivation, ISR deactivation and bearer deletion

Specially, in the case that the detach is not caused by the switch off of the user equipment, the related operation is performing the detach only in the current network locally; and in the case that the detach is caused by the switch off of the user equipment or an ISR deactivation is caused by the change of one of the pair of core network nodes with ISR activated, the related operation is performing the detach in both the current network and the associated network completely.

The procedure for the indicating device for deactivating ISR to implement the above method for deactivating ISR may be understood and implemented by referring to the above various embodiments, which is not described in detail here anymore.

In addition, in the case that the detach is not caused by the switch off of the UE, the related operation is the ISR deactivation; and in the case that the detach is caused by the switch off of the user equipment or an ISR deactivation is caused by the change of MME/SGSN, the related operation is the ISR deactivation and the bearer deletion.

The MME or the SGSN including the above indicating device for deactivating ISR should also be included in the protection scope of the present invention.

As described above, using the ISR deactivating solution according to the present invention capable of widely applied to various UE detach scenes in various ISR activating case, it is possible to guarantee the correct execution of the ISR deactivating procedure, and to avoid the flow error due to the asynchronous ISR state and the resource waste due to the invalid information.

Obviously, those skilled in the art shall understand that the above-mentioned modules and steps of the present invention can be realized by using general purpose calculating device, and can be integrated in one calculating device or distributed on a network which consists of a plurality of calculating devices. Alternatively, the modules and the steps of the present invention can be realized by using the executable program code of the calculating device. Consequently, they can be stored in the storage device and executed by the calculating device, or they can be made into integrated circuit module respectively, or a plurality of modules or steps thereof are made into one integrated circuit module. In this way, the present invention is not restricted to any particular hardware and software combination.

## Claims

1. A method for deactivating Idle mode Signaling Reduction, ISR, comprising:
when a registration state of a user equipment of a current core network node in a pair of core network nodes with ISR activated is changed, sending, by the current core network node, an ISR deactivating message or a detach notification message to an associated core network node and indicating the associated core network node to perform related operation;
wherein the related operation indicated by the ISR deactivating message comprises one of the following: ISR deactivation, ISR deactivation and bearer deletion;
wherein the related operation indicated by the detach notification message comprises one of the following: detach only in the current network locally, detach in both the current network and the associated network completely;
**characterized in that** in the case that the detach is not caused by the switch off of the user equipment, the related operation is the ISR deactivation; in the case that an ISR deactivation is caused by the detach which is caused by the switch off of the user equipment or by a change of one of the pair of core network nodes with ISR activated, the related operation is the ISR deactivation and the bearer deletion;
wherein in the case that the detach is not caused by the switch off of the user equipment, the related operation is detach only in the current network locally; in the case that the detach is caused by the switch off of the user equipment, the related operation is detach in both the current network and the associated network completely.

2. The method according to Claim 1, wherein before sending the ISR deactivating message to the associated core network node, the method further comprises:
the current core network node initiating a procedure for detaching the user equipment;
the current core network node performing the delete bearer procedure between the current core network node and a serving gateway.

3. The method according to Claim 1, wherein before sending the ISR deactivating message to the associated core network node, the method further comprises:
a home subscriber server sending a cancel location request to the current core network node;
the current core network node initiating a procedure for detaching the user equipment;
the current core network node performing a delete bearer procedure between the current core network node and a serving gateway.

4. The method according to Claim 1, wherein before sending the ISR deactivating message to the associated core network node, the method further comprises:
the current core network node performing a delete bearer procedure between the current core network node and a serving gateway when an implicit detach timer set by the current core network node expires.

5. The method according to Claim 1, wherein the ISR deactivating message carries operation information; performing the ISR deactivation or performing the ISR deactivation and bearer deletion is represented through setting different values for the operation information.

6. The method according to any one of Claims 1-5, wherein the core network node comprises: a mobility management entity and a serving GPRS support node; and the bearer(s) deleted in delete bearer procedure comprises: the bearer(s) between a serving gateway and the serving GPRS support node; the bearer(s) between the serving gateway and a packet data network gateway.

7. The method according to Claim 1, wherein before sending the detach notification message to the associated core network node, the method further comprises:
the current core network node performing a delete bearer procedure between the current core network node and a serving gateway when an implicit detach timer set by the current core network node expires.

8. The method according to Claim 1, wherein before sending the detach notification message to the associated core network node, the method further comprises:
a home subscriber server canceling an access authority of the current network;
the current core network node initiating a procedure for detaching the user equipment;
the current core network node performing a delete bearer procedure between the current core network node and a serving gateway.

9. The method according to Claim 1, wherein the detach notification message carries operation information; performing detach in the current network locally or performing detach in both the current network completely and the associated network is represented through setting different values for the operation information.

10. An indicating device for deactivating Idle mode Signaling Reduction, ISR, located in a core network node with ISR activated,
the indicating device for deactivating ISR is configured, when a registration state of a user equipment of the core network node is changed, to send an ISR deactivating message or a detach notification message to an associated core network node of the core network node, and to instruct the associated core network node to perform related operation;
wherein the related operation indicated by the ISR deactivating message comprises one of the following: ISR deactivation, ISR deactivation and bearer deletion;
wherein the related operation indicated by the detach notification message comprises one of the following: detach only in the current network locally, detach in both the current network and the associated network completely;
**characterized in that** in the case that the detach is not caused by the switch off of the user equipment, the related operation is the ISR deactivation; in the case that an ISR deactivation is caused by the detach which is caused by the switch off of the user equipment or by a change of one of the pair of core network nodes with ISR activated, the related operation is the ISR deactivation and the bearer deletion;
wherein in the case that the detach is not caused by the switch off of the user equipment, the related operation is detach only in the current network locally; in the case that the detach is caused by the switch off of the user equipment, the related operation is detach in both the current network and the associated network completely.

11. The device according to Claim 10, wherein the instructing device for deactivating ISR is located in a mobility management entity and/or a serving GPRS support node.

## Patentansprüche

1. Verfahren zur Deaktivierung der Leerlaufmodus-Signalisierungsreduktion, ISR, umfassend:
wenn ein Registrierungszustand eines Benutzergeräts eines aktuellen Kernnetzknotens in einem Paar von Kernnetzknoten mit aktiviertem ISR geändert wird, Senden durch den aktuellen Kernnetzknoten, eine ISR-Deaktivierungsnachricht oder eine Ablösungsbenachrichtigungsnachricht an ein zugeordnetes Kernnetzwerknoten und Angabe des zugeordneten Kernnetzknotens, um eine zugehörige Operation auszuführen;
wobei die zugehörige Operation, die durch die ISR-Deaktivierungsnachricht angegeben ist, eine der folgenden umfasst: ISR-Deaktivierung, ISR-Deaktivierung und Trägerlöschung;
wobei die zugehörige Operation, die durch die Ablösungsbenachrichtigungsnachricht angegeben ist, eine der folgenden umfasst: nur im aktuellen Netzwerk lokal ablösen, sowohl im aktuellen Netzwerk als auch im zugehörigen Netzwerk vollständig ablösen;
**dadurch gekennzeichnet, dass** die zugehörige Operation die ISR-Deaktivierung ist, falls die Ablösung nicht durch das Ausschalten des Benutzergeräts verursacht wird; falls eine ISR-Deaktivierung durch die Ablösung verursacht wird, die durch das Ausschalten des Benutzergeräts oder durch eine Änderung eines der beiden Kernnetzknoten mit aktiviertem ISR verursacht wird, ist die zugehörige Operation die ISR-Deaktivierung und die Trägerlöschung;
wobei die zugehörige Operation die Ablösung nur im aktuellen Netzwerk ist, falls die Ablösung nicht durch das Ausschalten des Benutzergeräts verursacht wird; falls die Ablösung durch das Ausschalten des Benutzergeräts verursacht wird, wird die zugehörige Operation sowohl im aktuellen Netzwerk als auch im zugehörigen Netzwerk vollständig ablösen.

2. Verfahren nach Anspruch 1, wobei das Verfahren vor dem Senden der ISR-Deaktivierungsnachricht an den zugeordneten Kernnetzknoten ferner umfasst:
Initiieren durch den aktuellen Kernnetzknoten von einer Prozedur zur Ablösung des Benutzergerätes;
Ausführen durch den aktuellen Kernnetzknoten von einer Löschträgerprozedur zwischen dem aktuellen Kernnetzknoten und einem Serving-Gateway.

3. Verfahren nach Anspruch 1, wobei das Verfahren vor dem Senden der ISR-Deaktivierungsnachricht an den zugeordneten Kernnetzknoten ferner umfasst:
Senden durch einen Heimatteilnehmerserver von einer Abbruchortanforderung an den aktuellen Kernnetzknoten;
Initiieren durch den aktuellen Kernnetzknoten von einer Prozedur zur Ablösung des Benutzergerätes;
Ausführen durch den aktuellen Kernnetzknoten von einer Löschträgerprozedur zwischen dem aktuellen Kernnetzknoten und einem Serving-Gateway.

4. Verfahren nach Anspruch 1, wobei das Verfahren vor dem Senden der ISR-Deaktivierungsnachricht an den zugeordneten Kernnetzknoten ferner umfasst:
Ausführen durch den aktuellen Kernnetzknoten von einer Löschträgerprozedur zwischen dem aktuellen Kernnetzknoten und einem Serving-Gateway, wenn ein impliziter, vom aktuellen Kernnetzknoten eingestellter Ablösungstimer abläuft.

5. Verfahren nach Anspruch 1, wobei die ISR-Deaktivierungsnachricht Operationsinformation trägt; die Durchführung der ISR-Deaktivierung oder die Durchführung der ISR-Deaktivierung, und die Trägerlöschung wird durch die Einstellung verschiedener Werte für die Operationsinformationen dargestellt.

6. Verfahren nach einem der Ansprüche 1 bis 5, wobei der Kernnetzknoten umfasst: eine Mobilitätsverwaltungseinheit und einen bedienenden GPRS-Unterstützungsknoten; und der/die Träger, der/die im Löschträgerprozedur gelöscht wurde/n, umfasst: den/die Träger zwischen einem Serving-Gateway und dem bedienenden GPRS-Unterstützungsknoten; der/die Träger zwischen dem Serving-Gateway und einem Paketdatennetzwerk-Gateway.

7. Verfahren nach Anspruch 1, wobei das Verfahren vor dem Senden der Ablösungsbenachrichtigungsnachricht an den zugeordneten Kernnetzknoten ferner umfasst:
Ausführen durch den aktuellen Kernnetzknoten von einer Löschträgerprozedur zwischen dem aktuellen Kernnetzknoten und einem Serving-Gateway, wenn ein impliziter, vom aktuellen Kernnetzknoten eingestellter Ablösungstimer abläuft.

8. Verfahren nach Anspruch 1, wobei das Verfahren vor dem Senden der Ablösungsbenachrichtigungsnachricht an den zugeordneten Kernnetzknoten ferner umfasst:
Abbrechen durch einen Heimatteilnehmerserver von einer Zugriffsberechtigung des aktuellen Netzes;
Initiieren durch den aktuellen Kernnetzknoten von einer Prozedur zur Ablösung des Benutzergerätes;
Ausführen durch den aktuellen Kernnetzknoten von einer Löschträgerprozedur zwischen dem aktuellen Kernnetzknoten und einem Serving-Gateway.

9. Verfahren nach Anspruch 1, wobei die Ablösungsbenachrichtigungsnachricht Operationsinformation trägt; die lokale Durchführung der Ablösung im aktuellen Netzwerk oder die vollständige Durchführung der Ablösung im aktuellen Netzwerk, und das zugehörige Netzwerk wird durch die Einstellung verschiedener Werte für die Operationsinformation dargestellt.

10. Anzeigeeinrichtung zur Deaktivierung des Leerlaufmodus-Signalisierungsreduktion, ISR, die sich in einem Kernnetzknoten mit aktiviertem ISR befindet, die Anzeigeeinrichtung zur Deaktivierung von ISR wird konfiguriert, wenn ein Registrierungszustand eines Benutzergeräts des Kernnetzknotens geändert wird, um eine ISR-Deaktivierungsnachricht oder eine Ablösungsbenachrichtigungsnachricht an einen zugeordneten Kernnetzknoten des Kernnetzknotens zu senden und zum Instruieren des zugeordneten Kernnetzknotens, um eine zugehörige Operation auszuführen;
wobei die zugehörige Operation, die durch die ISR-Deaktivierungsnachricht angegeben ist, eine der folgenden umfasst: ISR-Deaktivierung, ISR-Deaktivierung und Trägerlöschung;
wobei die zugehörige Operation, die durch die Ablösungsbenachrichtigungsnachricht angegeben ist, eine der folgenden umfasst: nur im aktuellen Netzwerk lokal ablösen, sowohl im aktuellen Netzwerk als auch im zugehörigen Netzwerk vollständig ablösen;
**dadurch gekennzeichnet, dass** die zugehörige Operation die ISR-Deaktivierung ist, falls die Ablösung nicht durch das Ausschalten des Benutzergeräts verursacht wird; falls eine ISR-Deaktivierung durch die Ablösung verursacht wird, die durch das Ausschalten des Benutzergeräts oder durch eine Änderung eines der beiden Kernnetzknoten mit aktiviertem ISR verursacht wird, ist die zugehörige Operation die ISR-Deaktivierung und die Trägerlöschung;
wobei die zugehörige Operation die Ablösung nur im aktuellen Netzwerk ist, falls die Ablösung nicht durch das Ausschalten des Benutzergeräts verursacht wird; falls die Ablösung durch das Ausschalten des Benutzergeräts verursacht wird, wird die zugehörige Operation sowohl im aktuellen Netzwerk als auch im zugehörigen Netzwerk vollständig ablösen.

11. Vorrichtung nach Anspruch 10, wobei die Anweisungseinrichtung zur Deaktivierung von ISR in einer Mobilitätsverwaltungseinheit und/oder einem bedienenden GPRS-Unterstützungsknoten angeordnet ist.

## Revendications

1. Procédé pour désactiver une réduction de la signalisation du mode veille (Idle mode Signaling Reduction / ISR), comprenant :
lorsqu'un état d'enregistrement, d'un équipement utilisateur d'un noeud de réseau central actuel dans une paire de noeuds de réseau central avec l'ISR activée, est modifié : envoyer, par le noeud de réseau central actuel, un message de désactivation de l'ISR ou un message de notification de déconnexion à un noeud de réseau central associé et indiquer au noeud de réseau central associé d'effectuer l'opération correspondante ;
dans lequel l'opération correspondante indiquée par le message de désactivation de l'ISR comprend une des modalités suivantes : désactivation de l'ISR, désactivation de l'ISR et suppression de porteuse;
dans lequel l'opération correspondante indiquée par le message de notification de déconnexion comprend une des modalités suivantes : déconnecter uniquement localement dans le réseau actuel, déconnecter complètement dans le réseau actuel et le réseau associé ;
**caractérisé en ce que** si la déconnexion n'est pas provoquée par la coupure de l'équipement utilisateur, l'opération correspondante est la désactivation de l'ISR ; si une désactivation de l'ISR est provoquée par la déconnexion étant provoquée par la coupure de l'équipement utilisateur ou par une modification de l'un des deux noeuds de réseau central avec l'ISR activée, l'opération correspondante est la désactivation de l'ISR et la suppression de porteuse ;
dans lequel si la déconnexion n'est pas provoquée par la coupure de l'équipement utilisateur, l'opération correspondante est uniquement déconnectée localement dans le réseau actuel ; si la déconnexion est provoquée par la coupure de l'équipement utilisateur, l'opération correspondante est complètement déconnectée dans le réseau actuel et dans le réseau associé.

2. Procédé selon la revendication 1, dans lequel avant l'envoi du message de désactivation de l'ISR au noeud de réseau central associé, le procédé comprend de plus :
le noeud de réseau central actuel initiant une procédure pour déconnecter l'équipement utilisateur ;
le noeud de réseau central actuel effectuant la procédure de suppression de porteuse entre le noeud de réseau central actuel et une passerelle de desserte.

3. Procédé selon la revendication 1, dans lequel avant l'envoi du message de désactivation de l'ISR au noeud de réseau central associé, le procédé comprend de plus :
un serveur d'abonné résidentiel envoyant une demande d'annulation de localisation au noeud de réseau central actuel ;
le noeud de réseau central actuel initiant une procédure pour déconnecter l'équipement utilisateur ; le noeud de réseau central actuel effectuant une procédure de suppression de porteuse entre le noeud de réseau central actuel et une passerelle de desserte.

4. Procédé selon la revendication 1, dans lequel avant l'envoi du message de désactivation de l'ISR au noeud de réseau central associé, le procédé comprend de plus :
le noeud de réseau central actuel effectuant une procédure de suppression de porteuse entre le noeud de réseau central actuel et une passerelle de desserte lorsqu'une temporisation de déconnexion implicite établie par le noeud de réseau central actuel expire.

5. Procédé selon la revendication 1, dans lequel le message de désactivation de l'ISR comporte des informations d'opérations ; effectuer la désactivation de l'ISR ou effectuer la désactivation de l'ISR et la suppression de porteuse est représentée à travers le paramétrage de valeurs différentes pour les informations d'opérations.

6. Procédé selon l'une quelconque des revendications 1-5, dans lequel le noeud de réseau central comprend : une entité de gestion de la mobilité et un noeud de porteuse GPRS de service ; et la (les) porteuse(s) supprimée(s) dans la procédure de suppression de porteuse comprend/comprennent : la (les) porteuse(s) entre une passerelle de desserte et le noeud de porteuse GPRS ; la (les) porteuse (s) entre la passerelle de desserte et une passerelle de réseau de données par paquets.

7. Procédé selon la revendication 1, dans lequel avant l'envoi du message de notification de déconnexion au noeud de réseau central associé, le procédé comprend de plus :
le noeud de réseau central actuel effectuant une procédure de suppression de porteuse entre le noeud de réseau central actuel et une passerelle de desserte lorsqu'une temporisation de déconnexion implicite établie par le noeud de réseau central actuel expire.

8. Procédé selon la revendication 1, dans lequel avant l'envoi du message de notification de déconnexion au noeud de réseau central associé, le procédé comprend de plus : un serveur d'abonné résidentiel supprimant l'autorisation d'accès du réseau actuel ;
le noeud de réseau central actuel initiant une procédure pour déconnecter l'équipement utilisateur ;
le noeud de réseau central actuel effectuant une procédure de suppression de porteuse entre le noeud de réseau central actuel et une passerelle de desserte.

9. Procédé selon la revendication 1, dans lequel le message de notification de déconnexion comporte des informations d'opérations ; effectue localement la déconnexion dans le réseau actuel ou effectue complètement la déconnexion dans les deux réseaux actuels et le réseau associé est représenté par le paramétrage de valeurs différentes pour les informations d'opérations.

10. Dispositif d'indication pour la désactivation d'une réduction de la signalisation du mode veille (ISR) situé dans un noeud de réseau central avec l'ISR activée, le dispositif d'indication servant à désactiver l'ISR est configuré lorsqu'un état d'enregistrement d'un équipement utilisateur du noeud de réseau central est modifié, pour envoyer un message de désactivation de l'ISR ou un message de notification de déconnexion à un noeud de réseau central associé du noeud de réseau central, et pour donner l'ordre au noeud de réseau central associé d'effectuer l'opération correspondante ;
dans lequel l'opération correspondante indiquée par le message de désactivation de l'ISR comprend une des modalités suivantes : désactivation de l'ISR, désactivation de l'ISR et suppression de porteuse;
dans lequel l'opération correspondante indiquée par le message de notification de déconnexion comprend une des modalités suivantes : déconnecter uniquement localement dans le réseau actuel, déconnecter complètement dans le réseau actuel et le réseau associé ;
**caractérisé en ce que** si la déconnexion n'est pas provoquée par la coupure de l'équipement utilisateur, l'opération correspondante est la désactivation de l'ISR ; si une désactivation de l'ISR est provoquée par la déconnexion étant provoquée par la coupure de l'équipement utilisateur ou par une modification de l'un des deux noeuds de réseau central avec l'ISR activée, l'opération correspondante est la désactivation de l'ISR et la suppression de porteuse ;
dans lequel si la déconnexion n'est pas provoquée par la coupure de l'équipement utilisateur, l'opération correspondante est uniquement déconnectée localement dans le réseau actuel ; si la déconnexion est provoquée par la coupure de l'équipement utilisateur, l'opération correspondante est complètement déconnectée dans le réseau actuel et dans le réseau associé.

11. Dispositif selon la revendication 10, dans lequel le dispositif de commande servant à désactiver l'ISR est situé dans une entité de gestion de la mobilité et/ou dans un noeud de porteuse GPRS de service.
